# FASCICULE DE BREVET EUROPEEN

(11) **EP 1 804 252 B1**
(45) Date de publication et mention de la délivrance du brevet: **06.07.2011**
(21) Numéro de dépôt: 06292065.7
(22) Date de dépôt: 28.12.2006
(51) Int. Cl.: G21C 1/09, G21C 13/032

(54) **Pressuriseur de centrale nucléaire à eau sous pression**
Druckhalter eines Kernkraftwerks mit einem Druckwasserreaktor
Pressurizer for a nuclear power plant with a pressurised water reactor

(30) Priorité: 29.12.2005 FR 0513466
(43) Date de publication de la demande: 04.07.2007
(73) Titulaire: Areva NP, 92400 Courbevoie (FR)
(72) Inventeur: Mathieu, Victor, 75015 Paris (FR); Izard, Jean-Pierre, 75020 Paris (FR)
(74) Mandataire: Domenego, Bertrand

(56) Documents cités:
- EP-A- 0 158 544
- EP-A- 0 440 353
- US-A- 5 202 082

## Description

L'invention concerne en général les pressuriseurs de centrales nucléaires à eau sous pression.

Plus précisément, l'invention concerne un pressuriseur de centrale nucléaire à eau sous pression, du type comprenant :
- une enveloppe externe délimitant un espace interne ;
- une conduite s'étendant sous l'enveloppe et susceptible d'être piquée sur le circuit primaire de la centrale nucléaire ;
- un piquage mettant en communication l'espace interne de l'enveloppe avec la conduite, ce piquage étant soudé sur la conduite par une soudure ;
- une manchette de protection de la soudure disposée à l'intérieur du piquage et présentant un bord périphérique inférieur engagé dans la conduite, la manchette définissant avec le piquage et la conduite un espace annulaire susceptible d'être rempli par le liquide primaire.

Il arrive que des particules radioactives s'accumulent dans l'espace annulaire, près de la soudure. Ces particules créent un débit de dose élevé à proximité du fond du pressuriseur, qui complique les opérations d'inspection et de maintenance sur le fond du pressuriseur.

Dans ce contexte, l'invention vise à proposer un pressuriseur dont la maintenance est plus facile.

A cette fin, l'invention propose un pressuriseur du type précité, caractérisé en ce que l'espace annulaire est ouvert le long d'au moins une partie du bord périphérique inférieur de la manchette et débouche ainsi à l'intérieur du conduit.

Le pressuriseur peut également présenter une ou plusieurs des caractéristiques ci-dessous, considérées individuellement ou selon toutes les combinaisons techniquement possibles :
- l'espace annulaire est ouvert le long de tout le bord périphérique inférieur de la manchette ;
- le piquage définit un canal interne mettant en communication le conduit et l'espace interne de l'enveloppe, le pressuriseur comprenant une couronne rigidement fixée à l'intérieur de l'enveloppe autour du canal interne, la manchette présentant une partie d'extrémité supérieure fixée sur la couronne ;
- la couronne et/ou la partie d'extrémité supérieure de la manchette comprend des orifices de circulation mettant en communication l'espace annulaire avec l'espace interne de l'enveloppe ;
- la section de passage des orifices de circulation est calibrée pour limiter le débit de liquide primaire à travers l'espace annulaire à une valeur maximum prédéterminée ;
- la section de passage totale des orifices de circulation est comprise entre 0,5 % et 2 % de la section de passage du canal interne du piquage ;
- l'espace annulaire présente le long du bord périphérique inférieur de la manchette une section de passage comprise entre 2 % et 10 % de la section de passage du canal interne du piquage ;
- la manchette est montée de manière amovible sur la couronne ;
- le pressuriseur comprend une crépine couvrant le canal interne du piquage et montée de manière amovible sur la couronne ;
- la partie d'extrémité supérieure de la manchette est prise entre la crépine et la couronne.

D'autres caractéristiques et avantages de l'invention ressortiront clairement de la description qui en est donnée ci-dessous, à titre indicatif et nullement limitatif, en référence aux figures annexées, parmi lesquelles :
- la figure 1 est une représentation schématique simplifiée du circuit primaire d'un réacteur nucléaire à eau sous pression, comprenant un pressuriseur selon l'invention ;
- la figure 2 est une vue partielle en coupe axiale du piquage du pressuriseur de la figure 1, montrant en outre la manchette de protection disposée à l'intérieur du piquage ;
- les figures 3 et 4 sont des vues agrandies de détails III et IV de la figure 2 ; et
- la figure 5 est une vue en coupe perpendiculairement à l'axe de la manchette, considérée suivant l'incidence des flèches V de la figure 2.

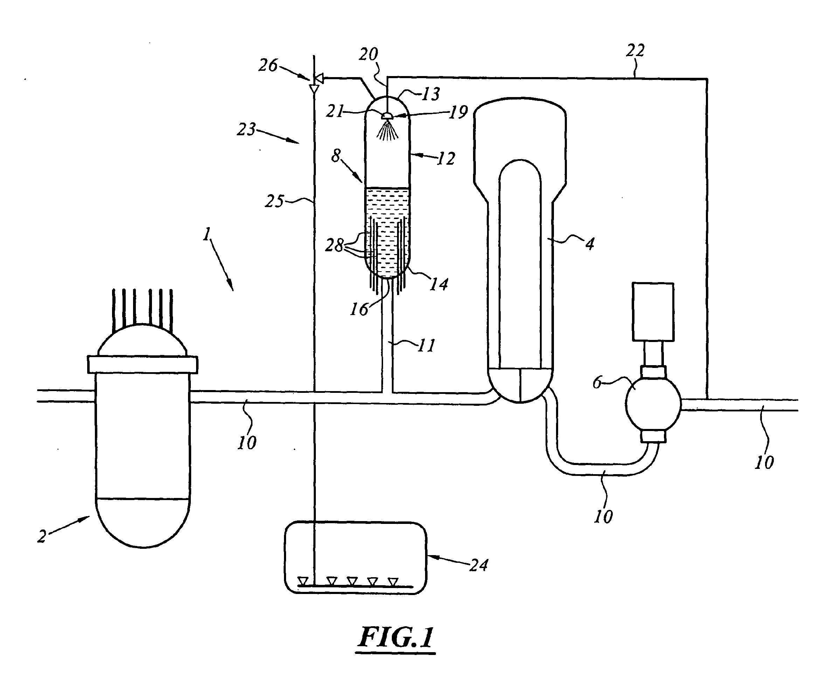

La figure 1 représente un circuit primaire 1 de réacteur nucléaire à eau sous pression. Ce circuit 1 comprend une cuve 2 dans laquelle se trouvent des assemblages de combustible nucléaire, un générateur de vapeur 4 pourvu de parties primaire et secondaire, une pompe primaire 6, et un pressuriseur 8. La cuve 2, le générateur de vapeur 4 et la pompe 6 sont reliés par des tronçons de tuyauterie primaire 10. Le circuit 1 contient de l'eau primaire, cette eau étant refoulée par la pompe 6 vers la cuve 2, traversant la cuve 2 en subissant un échauffement au contact des assemblages combustibles, puis traversant la partie primaire du générateur de vapeur 4 avant de revenir à l'aspiration de la pompe 6. L'eau primaire chauffée dans la cuve 2 cède sa chaleur dans le générateur de vapeur 4 à une eau secondaire traversant la partie secondaire de ce générateur. L'eau secondaire circule en boucle fermée dans un circuit secondaire non-représenté. Elle s'évapore en traversant le générateur 4, la vapeur ainsi produite entraînant une turbine à vapeur.

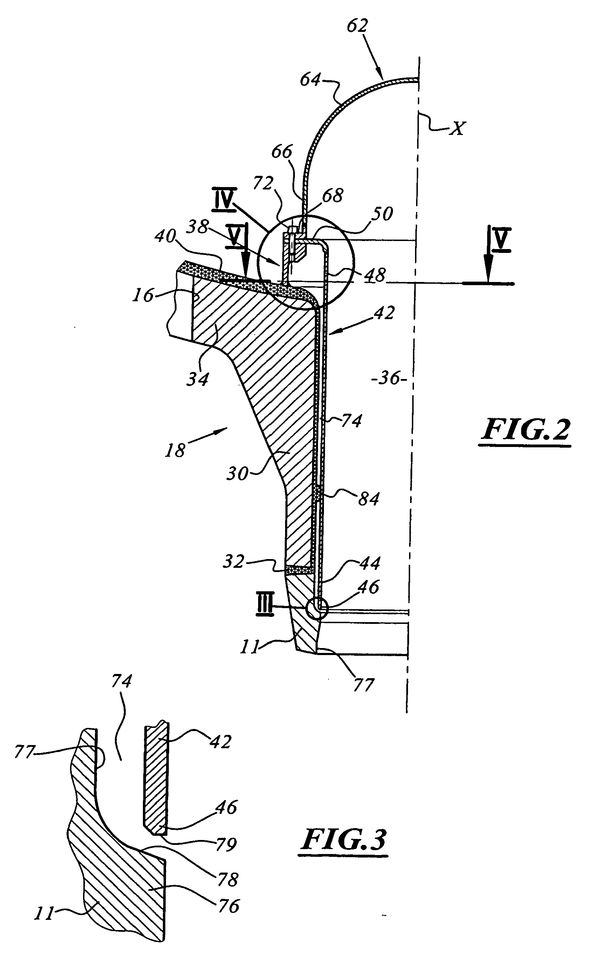

Le pressuriseur 8 est monté en dérivation sur la tuyauterie primaire par un conduit 11 piqué sur le tronçon 10 reliant la cuve 2 au générateur 4. Il est disposé à une élévation supérieure à celle de la pompe 6 et de la cuve 2. Le pressuriseur 8 comprend une enveloppe externe chaudronnée 12 sensiblement cylindrique et d'axe vertical, pourvue d'un dôme 13 et un fond inférieur 14. Le fond inférieur 14 comporte un orifice central 16 connecté au conduit 11 par un piquage 18 (figure 2).

Le pressuriseur 8 comporte également des moyens d'aspersion 19 comprenant un piquage 20 traversant le dôme 13, une buse d'aspersion 21 disposée à l'intérieur de l'enveloppe 11 et montée sur le piquage 20, une tuyauterie 22 raccordant le piquage 20 à la tuyauterie primaire, au niveau du refoulement de la pompe 6, et des moyens (non-représentés) pour sélectivement autoriser ou interdire la circulation d'eau primaire dans la tuyauterie 22 jusqu'à la buse 21.

Le circuit primaire 1 comprend également un circuit de sécurité 23 comportant un réservoir de décharge 24, une tuyauterie 25 connectant le réservoir 24 au dôme 13 du pressuriseur, et une soupape de sécurité 26 interposée sur la tuyauterie 25 entre le réservoir 24 et le pressuriseur 8.

L'espace intérieur du pressuriseur 8 est en communication avec le circuit primaire 1 par l'intermédiaire du piquage 18 et du conduit 11, de telle sorte que le pressuriseur 8 est en permanence partiellement rempli par l'eau primaire, le niveau d'eau à l'intérieur du pressuriseur étant fonction de la pression courante de fonctionnement du circuit primaire. Le ciel du pressuriseur 8 est rempli par de la vapeur d'eau, à une pression sensiblement égale à la pression de l'eau circulant dans la tuyauterie primaire 10 reliant le générateur 4.

En cas de surpression dans le pressuriseur, la soupape 26 s'ouvre et la vapeur d'eau est évacuée jusqu'au réservoir 24, dans laquelle elle se condense.

Le pressuriseur 8 est équipé de plusieurs dizaines de cannes chauffantes électriques 28. Ces cannes sont disposées verticalement, et sont montées sur le fond inférieur 14. Elles traversent le fond 14 par des orifices prévus à cet effet, des moyens d'étanchéité étant interposés entre les cannes et le fond 14.

Le pressuriseur 8 a pour fonction de contrôler la pression de l'eau dans le circuit primaire. Du fait qu'il communique par le conduit 11 avec la tuyauterie primaire, il joue un rôle de vase d'expansion. Ainsi, quand le volume d'eau en circulation dans le circuit primaire augmente ou diminue, le niveau d'eau à l'intérieur du pressuriseur 8 va, selon le cas, s'élever ou s'abaisser.

Cette variation du volume d'eau peut résulter par exemple d'une injection d'eau dans le circuit primaire, ou d'une variation de la température de fonctionnement du circuit primaire.

Le pressuriseur 8 a également pour fonction d'augmenter ou de diminuer la pression de fonctionnement du circuit primaire.

Pour augmenter la pression de fonctionnement du circuit primaire, on alimente électriquement les cannes de chauffage 28, de telle sorte que celles-ci chauffent l'eau contenue dans la partie inférieure du pressuriseur et l'amènent à sa température d'ébullition. Une partie de cette eau bout, de telle sorte que la pression dans le ciel du pressuriseur 8 augmente. Du fait que la vapeur est constamment en équilibre hydrostatique avec l'eau circulant dans le circuit primaire 1, la pression de fonctionnement de ce circuit primaire 1 augmente.

Pour faire diminuer la pression de fonctionnement du circuit primaire 1, on met en fonctionnement la buse d'aspersion 21 disposée dans le ciel du pressuriseur 8 en autorisant la circulation d'eau dans la tuyauterie 22 à l'aide des moyens prévus à cet effet. L'eau prélevée dans la tuyauterie primaire 10 au refoulement de la pompe 6 est projetée dans le ciel du pressuriseur 8, et provoque la condensation d'une partie de la vapeur d'eau qui s'y trouve. La pression de la vapeur d'eau dans le ciel du pressuriseur 8 diminue, de telle sorte que la pression de fonctionnement du circuit primaire 1 diminue elle aussi.

Comme on le voit sur la figure 2, le piquage 18 met en communication l'espace interne de l'enveloppe 12 du pressuriseur avec le conduit 11. Le piquage 18 comprend une partie 30 de forme générale cylindrique et d'axe vertical, présentant une extrémité inférieure rigidement fixée au conduit 11 par l'intermédiaire d'une soudure 32. La partie cylindrique 30 se prolonge vers le haut par une partie 34 formant collerette soudée sur les bords de l'ouverture 16. La partie sensiblement cylindrique 30 du piquage délimite un canal interne 36 d'axe X vertical qui relie l'espace interne de l'enveloppe 12 au conduit 11.

Le piquage 18 est une pièce forgée en acier ferritique. Le conduit 11 est réalisé en acier austénitique.

Le pressuriseur comprend également une couronne 38 cylindrique d'axe X entourant le canal interne 36 du piquage. La couronne 38 est disposée à l'intérieur de l'enveloppe 12, et est soudée sur la face 40 de la collerette 34 tournée vers l'intérieur de l'enveloppe 12. Cette face 40 présente une forme annulaire et entoure le canal interne 36.

Le pressuriseur comprend encore une manchette 42 de protection de la soudure 32. La manchette 42 présente une forme générale cylindrique d'axe central X, et est disposé dans le canal interne 36 de la manchette. Elle comprend une partie d'extrémité inférieure 44 engagée dans le conduit 11, et présentant un bord périphérique inférieur libre 46. Elle comporte également une partie d'extrémité supérieure 48 s'étendant dans l'espace interne de l'enveloppe 12. La partie 48 se prolonge radialement vers l'extérieur par une collerette 50 rigidement fixée sur la couronne 38.

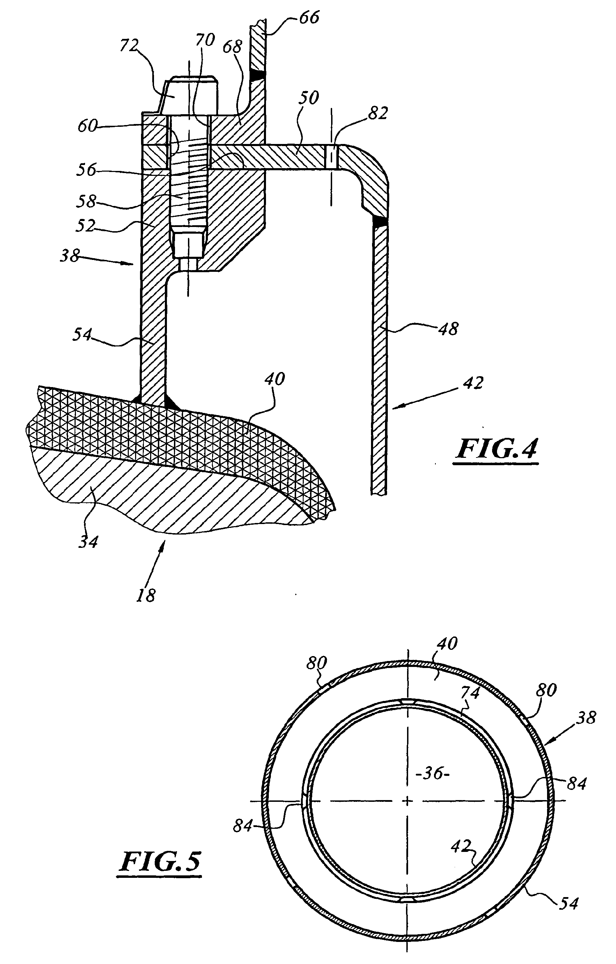

Comme le montre la figure 4, la couronne 38 présente un tronçon supérieur 52 présentant radialement une épaisseur importante, et un tronçon inférieur 54 d'épaisseur réduite soudée sur la face 40. La partie 52 est délimitée vers le haut par une tranche 56 percée par exemple de vingt trous filetés 58 d'axes verticaux. Les trous 58 sont régulièrement répartis autour de l'axe X. La collerette 50 de la manchette repose sur la face 56, et présente des orifices 60 disposés en coïncidence avec les trous 58.

Par ailleurs, le pressuriseur comprend également une crépine 62 disposée à l'intérieur de l'enveloppe 12 et couvrant le canal interne 36 du piquage. La crépine 62 comprend une partie 64 de forme hémisphérique percée par des trous de filtration répartis sur toute sa surface, prolongée par une partie cylindrique 66 fixée par l'intermédiaire d'une collerette 68 à la couronne 38. Comme le montre la figure 4, la collerette 50 de la manchette est prise entre la collerette 68 de la crépine et la face 56 de la couronne.

La collerette 68 est percée par des orifices 70 disposés en coïncidence avec les trous filetés 58. Des vis 72 traversent les orifices 70 et 60 et sont vissées dans les trous 58. Elles assurent la fixation à la fois de la crépine 62 et de la manchette 42 sur la couronne 38.

La crépine 62 a pour fonction de bloquer les éléments susceptibles d'être entraînés dans le circuit primaire par le liquide primaire. Elle a également un rôle de diffuseur et casse les vortex susceptibles de se former dans le flux de liquide primaire entrant ou sortant du pressuriseur.

La manchette 42 définit avec la partie cylindrique 30 du piquage et avec le conduit 11 un espace annulaire 74 d'axe X.

Comme le montre la figure 3, l'espace annulaire 74 est ouvert vers le bas, le long de tout le bord périphérique inférieur 46.

Comme le montrent les figures 2 et 3, un épaulement périphérique 76 est formé sur la face interne 77 du conduit 11, au niveau du bord périphérique inférieur 46 de la manchette. L'épaulement 76 est délimité vers le haut par une face 78 s'étendant sous le bord 46 et définissant avec celui-ci un orifice inférieur 79 de l'espace annulaire 74.

La face 78 est légèrement inclinée vers le bas, et se raccorde vers le haut à la face interne 77 du conduit 11 par une surface courbe.

Le tronçon inférieur 54 de la couronne 38 est percé de quatre orifices 80 mettant en communication l'espace annulaire 74 avec l'espace interne de l'enveloppe 12 (figure 5). De plus, la collerette 50 est percée de huit orifices 82 (figure 4) mettant en communication l'espace annulaire 74 avec l'espace interne de l'enveloppe 12. Les orifices 80 et 82 sont régulièrement répartis autour de l'axe X.

Les orifices 82 servent d'évents pendant le remplissage du pressuriseur.

La section de passage des orifices 80 est calibrée pour limiter le débit de liquide primaire à travers l'espace annulaire 74 à une valeur maximum prédéterminée.

Cette valeur est choisie au cas par cas, en fonction du domaine de température de fonctionnement du réacteur nucléaire et de la géométrie du pressuriseur.

La section de passage de l'orifice inférieur 79 de l'espace annulaire est choisie entre 2 % et 10 % de la section de passage du canal interne 36 de la manchette. Dans un exemple typique de réalisation, l'écartement entre la face 78 et le bord 46 est de 5 mm environ, et la section de passage vaut environ 10000 mm². La section de passage de l'espace annulaire 74 est typiquement comprise entre 10 % et 15 % de la section de passage du canal 36.

La section de passage cumulée des orifices 80 est de préférence comprise entre 0,5 % et 2 % de la section de passage du canal 36. Dans un exemple typique de réalisation, la section de passage totale des orifices 80 vaut environ 600 mm².

Enfin, quatre plots antivibratoires 84, régulièrement répartis autour de l'axe X, sont soudés sur la surface interne du piquage 18 (figures 2 et 5). Leur hauteur correspond sensiblement à l'épaisseur radiale de l'espace annulaire 74, de telle sorte que la manchette 42 repose normalement librement sur les plots 84.

Le pressuriseur décrit ci-dessus présente de multiples avantages.

Du fait que l'espace annulaire 74 est ouvert vers le bas, le long d'au moins une partie du bord périphérique inférieur de la manchette 42, et débouche ainsi dans le conduit 11, les particules radioactives ne peuvent pas s'accumuler dans cet espace annulaire et sont évacuées dans le conduit 11.

Par ailleurs, les orifices 80 ménagés dans la couronne 38 permettent de créer une circulation de fluide primaire dans l'espace annulaire 74. Les particules radioactives susceptibles de s'accumuler dans l'espace annulaire sont donc entraînées par le liquide primaire, ce qui diminue encore la probabilité qu'il se produise une accumulation de particules radioactives entre la manchette et le piquage ou le conduit.

De plus, la partie inférieure de l'espace annulaire 74 est orientée sensiblement radialement vers le centre du conduit 11, et la transition entre la partie axiale et la partie radiale de l'espace annulaire se fait selon une courbe de façon à ne pas créer d'angles morts dans lesquels les particules seraient susceptibles de s'accumuler.

Par ailleurs, la face 78 délimitant la partie radiale de l'espace annulaire vers le bas est légèrement inclinée vers le bas par rapport à l'horizontale, ce qui facilite l'entraînement des particules par le fluide primaire circulant dans l'espace annulaire.

Les sections de passage des orifices 80 en haut de la manchette sont choisies de manière à créer une perte de charge localisée prédéterminée pour le fluide primaire traversant l'espace annulaire. On limite de cette manière le débit de fluide primaire à travers l'espace annulaire à une valeur maximum prédéterminée. Les orifices 80 pourraient aussi être ménagés dans la collerette 50 de la manchette.

On notera que le fluide primaire est susceptible de circuler dans l'espace annulaire depuis le conduit 11 vers l'intérieur de l'enveloppe 12 (vers le haut), ou en sens inverse depuis l'intérieur de l'enveloppe 12 vers le conduit 11 (vers le bas). La géométrie des orifices 80 et de l'orifice inférieur 79 permet de créer une perte de charge dans les deux sens de circulation du fluide, et donc de limiter le débit dans les deux sens de circulation possibles.

Le fait que la partie inférieure de l'espace annulaire 74 soit orientée sensiblement radialement contribue à limiter le débit de liquide primaire dans l'espace annulaire 74 quand ce liquide circule de la tuyauterie primaire vers le pressuriseur. Cette orientation rend également plus difficile que des particules radioactives entraînées par le fluide primaire pénètrent par le bas dans l'espace annulaire.

La limitation du débit de fluide primaire dans l'espace annulaire 74 permet de limiter la rapidité des variations de température au niveau de la soudure 32. Ceci est important, car la soudure est interposée entre deux pièces (piquage 18 et conduit 11) réalisées dans des matériaux différents, et présentant des coefficients de dilatation thermique différents. L'impact des contraintes thermiques et mécaniques au niveau de la soudure et dans l'ensemble du piquage 18 est donc fortement limité en conséquence.

Enfin, on profite avantageusement de la présence de la couronne de fixation 38 de la manchette 42 pour monter la crépine 62 sur cette couronne.

La crépine 62 et la manchette 42 peuvent être démontées facilement. On retire d'abord les vis 72, qui sont aisément accessibles. On retire ensuite la crépine 62, puis on extrait la manchette 42 du piquage 30, par le haut.

En variante, il est possible de choisir la section de passage de l'orifice inférieure 79 de manière à créer une perte de charge localisée en complément de celle créée par les orifices 80.

Il est possible que l'orifice inférieur 79 s'étende sur toute la périphérie du bord périphérique inférieur 46, ou seulement sur une partie de celui-ci. L'orifice 79 peut être continu ou être divisé en plusieurs ouvertures séparées les unes des autres.

## Revendications

1. Pressuriseur (8) de centrale nucléaire à eau sous pression, comprenant
- une enveloppe externe (12) délimitant un espace interne, l'enveloppe externe (12) comprenant un fond inférieur (14);
- un conduit (11) s'étendant sous l'enveloppe (12) et susceptible d'être piqué sur le circuit primaire (1) de la centrale nucléaire ;
- un piquage (18) connectant le conduit (11) au fond (14) et mettant en communication l'espace interne de l'enveloppe (12) avec le conduit (11), ce piquage (18) étant soudé sur le conduit (11) par une soudure (32) ;
- une manchette (42) de protection de la soudure (32) disposée à l'intérieur du piquage (18), et présentant un bord périphérique inférieur (46) engagé dans le conduit (11), la manchette (42) définissant avec le piquage (18) et le conduit (11) un espace annulaire (74) susceptible d'être rempli par le liquide primaire ;
**caractérisé en ce que** l'espace annulaire (74) est ouvert le long d'au moins une partie du bord périphérique inférieur (46) de la manchette (42) et débouche à l'intérieur du conduit (11).

2. Pressuriseur selon la revendication 1, **caractérisé en ce que** l'espace annulaire (74) est ouvert le long de tout le bord périphérique inférieur (46) de la manchette (42).

3. Pressuriseur selon l'une quelconque des revendications 1 et 2, **caractérisé en ce que** le piquage (18) définit un canal interne (36) mettant en communication le conduit (11) et l'espace interne de l'enveloppe (12), le pressuriseur (8) comprenant une couronne (38) rigidement fixée à l'intérieur de l'enveloppe (12) autour du canal interne (36), la manchette (42) présentant une partie d'extrémité supérieure (48) fixée sur la couronne (38).

4. Pressuriseur selon la revendication 3, **caractérisé en ce que** la couronne (38) et/ou la partie d'extrémité supérieure (48) de la manchette (42) comprend des orifices de circulation (80) mettant en communication l'espace annulaire (74) avec l'espace interne de l'enveloppe (12).

5. Pressuriseur selon la revendication 4, **caractérisé en ce que** la section de passage des orifices de circulation (80) est calibrée pour limiter le débit de liquide primaire à travers l'espace annulaire (74) à une valeur maximum prédéterminée.

6. Pressuriseur selon la revendication 5, **caractérisé en ce que** la section de passage totale des orifices de circulation (80) est comprise entre 0,5 % et 2 % de la section de passage du canal interne (36) du piquage (18).

7. Pressuriseur selon l'une quelconque des revendications 3 à 6, **caractérisé en ce que** l'espace annulaire (74) présente le long du bord périphérique inférieur (46) de la manchette (42) une section de passage comprise entre 2 % et 10 % de la section de passage du canal interne (36) du piquage (18).

8. Pressuriseur selon l'une quelconque des revendications 3 à 7, **caractérisé en ce que** la manchette (42) est montée de manière amovible sur la couronne (38).

9. Pressuriseur selon l'une quelconque des revendications 3 à 7, **caractérisé en ce qu'**il comprend une crépine (62) couvrant le canal interne (36) du piquage (18) et montée de manière amovible sur la couronne (38).

10. Pressuriseur selon la revendication 9, **caractérisé en ce que** la partie d'extrémité supérieure (48) de la manchette (42) est prise entre la crépine (62) et la couronne (38).

## Claims

1. Pressuriser (8) for a pressurised water nuclear power station, comprising
- an outer casing (12) which delimits an inner space, the outer casing (12) comprising a lower base (14);
- a duct (11) which extends beneath the casing (12) and which is capable of being tapped from the coolant system (1) of the nuclear power station;
- a tap (18) connecting the duct (11) to the base (14) and which places the inner space of the casing (12) in communication with the duct (11), this tap (18) being welded to the duct (11) by means of a weld seam (32);
- a sleeve (42) for protecting the weld seam (32), which sleeve (42) is arranged inside the tap (18) and which has a lower peripheral edge (46) which is engaged in the duct (11), the sleeve (42) defining with the tap (18) and the duct (11) an annular space (74) which is capable of being filled with the primary liquid;
wherein the annular space (74) is open along at least a portion of the lower peripheral edge (46) of the sleeve (42) and opens inside the duct (11).

2. Pressuriser according to claim 1, wherein the annular space (74) is open along the entire lower peripheral edge (46) of the sleeve (42).

3. Pressuriser according to claim 1, wherein the tap (18) defines an inner channel (36) which places the duct (11) and the inner space of the casing (12) in communication, the pressuriser (8) comprising a crown (38) which is rigidly fixed inside of the casing (12) around the inner channel (36), the sleeve (42) having an upper end portion (48) which is fixed to the crown (38).

4. Pressuriser according to claim 3, wherein the crown (38) and/or the upper end portion (48) of the sleeve (42) comprise(s) circulation holes (80) which place the annular space (74) in communication with the inner space of the casing (12).

5. Pressuriser according to claim 4, wherein the passage cross-section of the circulation holes (80) is calibrated in order to limit the flow rate of primary liquid through the annular space (74) to a maximum predetermined value.

6. Pressuriser according to claim 5, wherein the total passage cross-section of the circulation holes (80) is between 0.5% and 2% of the passage cross-section of the inner channel (36) of the tap (18).

7. Pressuriser according to claim 3, wherein the annular space (74) has, along the lower peripheral edge (46) of the sleeve (42), a passage cross-section of between 2% and 10% of the passage cross-section of the inner channel (36) of the tap (18).

8. Pressuriser according to claim 3, wherein the sleeve (42) is mounted so as to be able to be removed on the crown (38).

9. Pressuriser according to claim 3, wherein it comprises a strainer (62) which covers the inner channel (36) of the tap (18) and which is mounted so as to be able to be removed on the crown (38).

10. Pressuriser according to claim 9, wherein the upper end portion (48) of the sleeve (42) is engaged between the strainer (62) and the crown (38).

## Patentansprüche

1. Druckhalter (8) eines Kernkraftwerks mit einem Druckwasserreaktor, umfassend:
- eine einen Innenraum abgrenzende Außenhülle (12), wobei die Außenhülle (12) einen unteren Boden (14) umfasst;
- eine Leitung (11), die sich unter der Hülle (12) erstreckt und mittels der der Primärkreislaufs (1) des Kernkraftwerks angezapft werden kann;
- eine Anzapfeinrichtung (18), die den Innenraum der Hülle (12) mit der Leitung (11) verbindet, wobei diese Anzapfeinrichtung (18) mittels einer Schweißung (32) an die Leitung (11) geschweißt ist;
- eine Schutzmanschette (42) der Schweißung (32), die im Innern der Anzapfeinrichtung (18) angeordnet ist und einen in der Leitung (11) sitzenden peripheren unteren Rand (46) aufweist, wobei die Manschette (42) mit der Anzapfeinrichtung (18) und der Leitung (11) einen ringförmigen Raum (74) bildet, der sich mit Primärflüssigkeit füllen kann;
**dadurch gekennzeichnet, dass** der ringförmige Raum (74) längs wenigstens eines Teils des peripheren unteren Rands (46) der Manschette (42) offen ist und im Innern der Leitung (11) mündet.

2. Druckhalter nach Anspruch 1, **dadurch gekennzeichnet, dass** der ringförmige Raum (74) längs des gesamten peripheren unteren Rands (46) der Manschette (42) offen ist.

3. Druckhalter nach einem der Ansprüche 1 und 2, **dadurch gekennzeichnet, dass** die Anzapfeinrichtung (18) einen internen Kanal (36) definiert, der die Leitung (11) und den Innenraum der Hülle (12) verbindet, wobei der Druckhalter (8) einen im Innern der Hülle (12) um den internen Kanal (36) herum starr befestigten Kranz (38) umfasst und die Manschette (42) einen an dem Kranz (38) befestigten oberen Endteil (48) aufweist.

4. Druckhalter nach Anspruch 3, **dadurch gekennzeichnet, dass** der Kranz (38) und/oder der obere Endteil (48) der Manschette (42) Zirkulationsöffnungen (80) umfasst, die den ringförmigen Raum (74) mit dem Innenraum der Hülle (12) verbinden.

5. Druckhalter nach Anspruch 4, **dadurch gekennzeichnet, dass** der Durchlassquerschnitt der Zirkulationsöffnungen (80) kalibriert ist, um die den ringförmigen Raum (74) durchquerende Primärflüssigkeitsdurchsatzmenge auf einen vorbestimmten Höchstwert zu begrenzen.

6. Druckhalter nach Anspruch 5, **dadurch gekennzeichnet, dass** der Gesamtdurchlassquerschnitt der Zirkulationsöffnungen (80) zwischen 0,5 % und 2 % des Durchlassquerschnitts des internen Kanals (36) der Anzapfeinrichtung (18) enthalten ist.

7. Druckhalter nach einem der Ansprüche 3 bis 6, **dadurch gekennzeichnet, dass** der ringförmige Raum (74) längs des unteren peripheren Rands (46) der Manschette (42) einen zwischen 2 % und 10 % des Durchlassquerschnitts des internen Kanals (36) der Anzapfeinrichtung (18) enthaltenen Querschnitts aufweist.

8. Druckhalter nach einem der Ansprüche 3 bis 7, **dadurch gekennzeichnet, dass** die Manschette (42) auf abnehmbare Weise auf den Kranz (38) montiert ist.

9. Druckhalter nach einem der Ansprüche 3 bis 7, **dadurch gekennzeichnet, dass** er einen Siebkorb (62) umfasst, der den internen Kanal (36) der Anzapfeinrichtung (18) bedeckt und der auf abnehmbare Weise auf den Kranz (38) montiert ist.

10. Druckhalter nach Anspruch 9, **dadurch gekennzeichnet, dass** das obere Ende (48) der Manschette (42) eingespannt ist zwischen dem Siebkorb (62) und dem Kranz (38).
